(19) Europäisches Patentamt
European Patent Office
Office européen des brevets

(11) **EP 4 676 145 A1**

(12) **EUROPEAN PATENT APPLICATION**
published in accordance with Art. 153(4) EPC

(43) Date of publication:
**07.01.2026 Bulletin 2026/02**

(21) Application number: **24787762.4**

(22) Date of filing: **18.01.2024**

(51) International Patent Classification (IPC):
**H04W 72/1263** (2023.01)

(52) Cooperative Patent Classification (CPC):
**H04W 72/1263; H04W 72/50;** Y02D 30/70

(86) International application number:
**PCT/CN2024/073009**

(87) International publication number:
**WO 2024/212656 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.04.2023 CN 202310446691**

(71) Applicant: **Huawei Technologies Co., Ltd.
Shenzhen, Guangdong 518129 (CN)**

(72) Inventors:
• **DU, Kai**
**Shenzhen, Guangdong 518129 (CN)**
• **LIU, Taizhan**
**Shenzhen, Guangdong 518129 (CN)**
• **ZHANG, Yunji**
**Shenzhen, Guangdong 518129 (CN)**
• **SONG, Yanfei**
**Shenzhen, Guangdong 518129 (CN)**

(74) Representative: **Maiwald GmbH
Engineering
Elisenhof
Elisenstrasse 3
80335 München (DE)**

(54) **RECEIVING ANTENNA CONTROL METHOD, ELECTRONIC DEVICE, READABLE STORAGE MEDIUM, AND CHIP**

(57) Embodiments of this application provide a receive antenna control method, an electronic device, a readable storage medium, and a chip, and relate to the field of communication technologies. The method is applied to an electronic device. The electronic device includes n receive antennas. The method includes: obtaining a running status of a foreground application; and switching to using m receive antennas for signal reception when the running status satisfies a first condition and the electronic device uses k receive antennas for signal reception, where $k < m$, and $m \leq n$. According to technical solutions provided in embodiments of this application, a quantity of Rx antennas put into use by the electronic device can be increased based on the running status of the foreground application to improve a downlink communication rate, thereby improving service smoothness and user experience.

An electronic device determines that a running status of a foreground application satisfies a first condition, or a charging event occurs in the electronic device — S601

Is a quantity k of Rx antennas currently in use less than n? — S602

Y

Increase the quantity of in-use Rx antennas from k to m, where $k < m \leq n$ — S603

FIG. 6

## Description

This application claims priority to Chinese Patent Application No. 202310446691.7, filed with the China National Intellectual Property Administration on April 14, 2023 and entitled "RECEIVE ANTENNA CONTROL METHOD, ELECTRONIC DEVICE, READABLE STORAGE MEDIUM, AND CHIP", which is incorporated herein by reference in its entirety.

## TECHNICAL FIELD

This application relates to the field of communication technologies, and in particular, to a receive antenna control method, an electronic device, a readable storage medium, and a chip.

## BACKGROUND

With evolution of communication technologies, both transmit antennas and receive antennas in an electronic device keep increasing. A communication rate can be improved as the antennas increase, but power consumption of the device increases accordingly. To balance the communication rate and the power consumption of the device, usually the electronic device dynamically adjusts a quantity of antennas actually put into use.

Currently, for the receive antennas, a modem of the electronic device usually dynamically adjusts, based on a downlink scheduling rate of a network-side device for the electronic device, a quantity of receive antennas put into use, for example, increases the receive antennas put into use when the downlink scheduling rate is high, and reduces the receive antennas put into use when the downlink scheduling rate is low. However, based on this method, when the downlink scheduling rate decreases but the electronic device actually needs to improve a downlink communication rate, the modem may further reduce the receive antennas put into use. Consequently, the downlink communication rate further decreases, and service experience deteriorates.

## SUMMARY

This application provides a receive antenna control method, an electronic device, a readable storage medium, and a chip, to resolve the following problem in a conventional technology: An electronic device incorrectly adjusts receive antennas, and consequently a downlink communication rate decreases and service experience deteriorates.

To achieve the foregoing objective, this application uses the following technical solutions.

According to a first aspect, an embodiment of this application provides a receive antenna control method. The method is applied to an electronic device, and the electronic device includes n receive antennas. The method includes: determining a running status of a foreground application; and switching to using m receive antennas for signal reception when the running status satisfies a first condition and the electronic device uses k receive antennas for signal reception, where $k < m$, and $m \leq n$.

Herein, that the electronic device switches to using the m receive antennas for signal reception may be: increasing a quantity of receive antennas instead of using all of the receive antennas for signal reception; or using all of the receive antennas for signal reception.

According to the method provided in this embodiment of this application, the electronic device can increase the quantity of in-use receive antennas with reference to the actual running status of the foreground application, to improve a downlink communication rate, thereby improving service smoothness and user experience.

In some embodiments, that the running status satisfies the first condition includes: Stalling occurs in a running process of the foreground application. In the method, when stalling occurs in the foreground application, the quantity of in-use receive antennas can be increased, to improve the downlink communication rate and the stalling of the foreground application, thereby improving user experience.

In some embodiments, that the running status satisfies the first condition includes: Cold start of the foreground application succeeds, or the foreground application sends a preset data obtaining request to a network-side device. The preset data obtaining request includes a page refresh request, a data download request, or an information search request.

It should be understood that, after cold start of the foreground application succeeds, and during page refresh, data download, or information search, an amount of downlink data of the foreground application is large. In these heavy-traffic data reception scenarios, the electronic device can increase the quantity of receive antennas, to improve the downlink communication rate, thereby improving service smoothness and user experience.

In some embodiments, the stalling of the foreground application is determined by the foreground application on its own.

In some embodiments, the stalling of the foreground application is determined by the electronic device based on a related parameter of an application processor AP, or based on a related parameter of an AP and a related parameter of a modem. In other words, the electronic device itself determines, without relying on the foreground application, whether stalling occurs in the foreground application.

In some embodiments, the related parameter of the AP includes: round trip time RTT of a transmission control protocol TCP flow of the foreground application, and/or a time interval between a first handshake and a second handshake in a TCP three-way handshake process, and/or a retransmission rate of a downlink data packet; and the related parameter of the modem includes: reference signal strength, and/or reference signal quality, and/or a downlink symbol error rate of a physical layer.

In some embodiments, switching to using the m receive antennas for signal reception when the running status satisfies the first condition and the electronic device uses the k receive antennas for signal reception includes: starting a test timer and using the n receive antennas for signal reception when the running status satisfies the first condition and the electronic device uses the k receive antennas for signal reception; monitoring, after the test timer expires, whether the stalling of the foreground application is improved; and reducing a quantity of in-use receive antennas if the stalling of the foreground application is not improved; or continuing to use the n receive antennas for signal reception if the stalling of the foreground application is improved.

Because many factors affect the downlink reception rate, the electronic device needs to test whether the stalling of the foreground application can be improved by putting all of the receive antennas into use, to avoid a waste of power consumption.

In some embodiments, reducing the quantity of in-use receive antennas if the stalling of the foreground application is not improved includes: starting a first protection timer if the stalling of the foreground application is not improved; and reducing the quantity of in-use receive antennas after the first protection timer expires. The method can prevent the electronic device from frequently putting all of the receive antennas into use, and can avoid a waste of power consumption of the device.

In some embodiments, after reducing the quantity of in-use receive antennas after the first protection timer expires, the method further includes: starting a suppression timer, where a length of the suppression timer is $T = T1 * prohibitN$, T1 is a preset length, and prohibitN is a quantity of stalling times; and after the suppression timer expires, increasing the quantity of stalling times by 1, and re-determining whether stalling occurs in the running process of the foreground application.

In the method, when the electronic device has put all of the receive antennas into use for a plurality of times but the stalling of the foreground application still cannot be improved, the suppression timer can shorten a proportion of duration in which all of the receive antennas are in use in an entire receive antenna control process, thereby reducing power consumption of the device.

In some embodiments, continuing to use the n receive antennas for signal reception if the stalling of the foreground application is improved includes: starting a second protection timer if the stalling of the foreground application is improved; and using the n receive antennas for signal reception before the second protection timer expires. In the method, the electronic device can be prevented from continuously using a highest receive antenna specification, thereby reducing the power consumption of the device.

In some embodiments, the method further includes: after the second protection timer expires, reducing the quantity of in-use receive antennas, and starting an autonomous operation timer; and after the autonomous operation timer expires, re-determining whether stalling occurs in the running process of the foreground application.

According to a second aspect, an embodiment of this application provides a receive antenna control method. The method is applied to an electronic device, and the electronic device includes n receive antennas. The method includes: determining that a charging event occurs in the electronic device; and in response to the charging event, switching to using m receive antennas for signal reception in a process in which the electronic device uses k receive antennas for signal reception, where $k < m$, and $m \leq n$.

According to the method provided in this embodiment of this application, the electronic device can use a highest antenna specification for downlink signal reception when the electronic device is in a charging state, to ensure smooth running of each application (including a foreground application and a background application) to a maximum extent in a charging process of the device, thereby improving user experience.

In some embodiments, the method further includes: reducing a quantity of in-use receive antennas after a charging end event, a device screen-off event, or a data service deactivation event is detected, to reduce power consumption of the device.

According to a third aspect, an embodiment of this application provides an electronic device, including a memory, a processor, and a computer program that is stored in the memory and is runnable on the processor. When the processor executes the computer program, the method according to the first aspect or the second aspect is implemented.

According to a fourth aspect, an embodiment of this application provides a computer-readable storage medium. The computer-readable storage medium stores a computer program. When the computer program is executed by a processor, the method according to the first aspect or the second aspect is implemented.

According to a fifth aspect, an embodiment of this application provides a chip. The chip includes a processor and a memory. The memory stores a computer program. When the computer program is executed by the processor, the method according to the first aspect or the second aspect is implemented.

It may be understood that, for beneficial effects of the third aspect to the fifth aspect, reference may be made to related descriptions in the first aspect or the second aspect. Details are not described herein again.

**BRIEF DESCRIPTION OF DRAWINGS**

FIG. 1 is a diagram of a communication system according to an embodiment of this application;

FIG. 2A is a diagram of an antenna switching process according to an embodiment of this application;

FIG. 2B is a diagram of an antenna switching process according to another embodiment of this application;

FIG. 3 is a diagram of an electronic device to which a receive antenna control method is applicable according to an embodiment of this application;

FIG. 4 is a diagram of notification of a stalling event according to an embodiment of this application;

FIG. 5 is a diagram of a process of determining a stalling status of a foreground application according to an embodiment of this application;

FIG. 6 is a flowchart of an Rx antenna control method according to an embodiment of this application;

FIG. 7 is a flowchart of an Rx antenna control method according to another embodiment of this application;

FIG. 8 is a flowchart of an Rx antenna control method according to still another embodiment of this application;

FIG. 9 is a flowchart of an Rx antenna control method according to yet another embodiment of this application; and

FIG. 10 is a diagram of a structure of a chip according to an embodiment of this application.

**DESCRIPTION OF EMBODIMENTS**

The following describes technical solutions provided in embodiments of this application with reference to the accompanying drawings.

It should be understood that, in the description of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

The terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more features. In the description of embodiments, unless otherwise specified, "a plurality of" means two or more.

The technical solutions in embodiments of this application may be applied to various communication systems, for example, a Long Term Evolution (Long Term Evolution, LTE) system, an LTE Frequency Division Duplex (Frequency Division Duplex, FDD) system, an LTE Time Division Duplex (Time Division Duplex, TDD) system, a Universal Mobile Telecommunications System (Universal Mobile Telecommunications System, UMTS), a Worldwide Interoperability for Microwave Access (Worldwide Interoperability for Microwave Access, Wi-MAX) communication system, a 5th Generation (5th Generation, 5G) system or a New Radio (New Radio, NR) system, a Global System for Mobile Communications (Global System for Mobile Communications, GSM), a Code Division Multiple Access (Code Division Multiple Access, CDMA) communication system, and a Time Division-Synchronous Code Division Multiple Access (Time Division-Synchronous CDMA, TD-SCDMA) communication system.

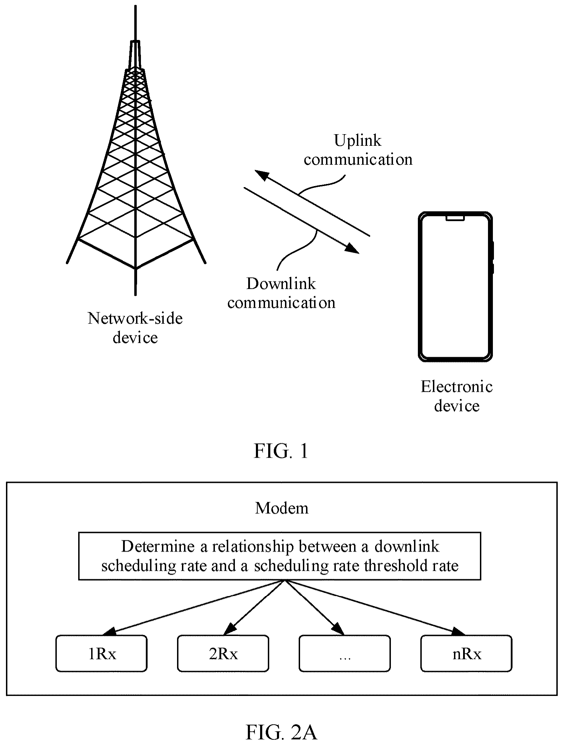

FIG. 1 is a diagram of a communication system according to an embodiment of this application. As shown in FIG. 1, the communication system includes a network-side device and an electronic device that are connected in a wireless manner, and the two devices communicate with each other to implement information exchange and transmission.

In this embodiment, the electronic device may be a terminal device, such as a mobile phone, a tablet computer, a wearable device (for example, a smart watch), an in-vehicle device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in this embodiment of this application.

In this embodiment, the network-side device may be a device that can provide a random access function for the electronic device, or a chip that can be disposed in the device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), and a baseband unit (baseband unit, BBU). In addition, the device may be: a gNB or a transmission point (TRP or TP) in a 5G system such as an NR system, or one or a group (including a plurality of) of antenna panels of a base station in a 5G system; or may be a network node that forms a gNB or a transmission point, such as a baseband unit (BBU) or a distributed unit (distributed unit, DU), a network-side device in a 5G network, or a network-side device in a future evolved public land mobile network (public land mobile network, PLMN). This is not limited in this embodiment of this application.

A process of communication between the network-side device and the electronic device includes an uplink communication process and a downlink communication process. In the uplink communication process, the electronic device is a transmit end of a signal, the network-side device is a receive end of the signal, the signal is referred to as an uplink signal, and data carried in the signal is referred to as uplink data. In the downlink communication process, the network-side device is a transmit end of a signal, the electronic device is a receive end of the signal, the signal is referred to as a downlink signal, and data carried in the signal is referred to as downlink data. For example, in a process in which the electronic device accesses a web page by using cellular data, a process in which the electronic device sends information such as a web page opening request and a web page refresh request to a base station is an uplink communication process; and a process in which the base station sends web page information to the electronic device is a downlink communication process.

In the communication process, the transmit end transmits a signal by using a transmit antenna (that is, a Tx antenna), and the receive end receives the signal by using a receive antenna (that is, an Rx antenna). Specifically, in the uplink communication process, the electronic device transmits the signal by using a Tx antenna, and the network-side device receives the signal by using an Rx antenna. In the downlink communication process, the network-side device transmits the signal by using a Tx antenna, and the electronic device receives the signal by using an Rx antenna.

For ease of description, in this embodiment, $k_1$Tx represents $k_1$ receive antennas, where $k_1 = 1, 2, ..., m$, and m is a total quantity of receive antennas in the electronic device. In addition, $k_2$Rx represents $k_2$ transmit antennas, where $k_2 = 1, 2, ..., n$, and n is a total quantity of transmit antennas in the electronic device. It may be understood that 2Tx represents two transmit antennas, 2Rx represents two receive antennas, 4Rx represents four receive antennas, and nRx represents all receive antennas in the electronic device, that is, a highest receive antenna specification.

It should be noted that, there are a plurality of types of antennas based on different operating frequency bands of the antennas. A type of an antenna described in this embodiment corresponds to a type of a communication system currently used by the electronic device.

For example, when the electronic device currently uses a 5th generation mobile communication technology (5G) cellular communication system for communication, the antenna is an antenna configured to transmit/receive a 5G cellular signal, and is referred to as a 5G cellular antenna for short. In addition, $k_1$Tx represents $k_1$ 5G cellular receive antennas, and m is a total quantity of 5G cellular receive antennas in the electronic device; $k_2$Rx represents $k_2$ 5G cellular transmit antennas, n is a total quantity of 5G cellular transmit antennas in the electronic device, and nRx represents all 5G cellular receive antennas in the electronic device.

For another example, when the electronic device uses a Wireless Fidelity (Wireless Fidelity, Wi-Fi) communication system for communication, the antenna is an antenna configured to transmit/receive a Wi-Fi signal, and is referred to as a Wi-Fi antenna for short. In addition, $k_1$Tx represents $k_1$ Wi-Fi receive antennas, and m is a total quantity of Wi-Fi receive antennas in the electronic device; $k_2$Rx represents $k_2$ Wi-Fi transmit an-

tennas, n is a total quantity of Wi-Fi transmit antennas in the electronic device, and nRx represents all Wi-Fi receive antennas in the electronic device.

With evolution of communication technologies, a quantity of antennas of an electronic device keep increasing, where a quantity of Rx antennas has generally risen to 4 or even more. In the downlink communication process, a downlink data transmission rate is higher as a quantity of Rx antennas put into use by the electronic device is increased, thereby improving service experience on the side of the electronic device and improving user experience. A reason is as follows.

In some embodiments, when the electronic device communicates with the network-side device based on a spatial multiplexing technology, a large quantity of Rx antennas can increase a quantity of spatial multiplexing layers and improve a channel capacity, thereby improving a downlink data reception rate.

Spatial multiplexing means that both the transmit end and the receive end use a plurality of antennas to form a multiple-input multiple-output (massive multiple input multiple output, MIMO) channel on a same frequency band for signal transmission. One MIMO channel includes a plurality of MIMO sub-channels (also referred to as virtual channels). Generally, one Tx antenna and one Rx antenna form one MIMO sub-channel. It may be understood that, because the spatial multiplexing technology divides data into a plurality of paths for simultaneous transmission on a plurality of MIMO sub-channels, the spatial multiplexing technology can improve the channel capacity and improve the data transmission rate.

In spatial multiplexing, a quantity of antenna layers (layers) is equal to a quantity of MIMO sub-channels. Because the communication process is a process in which a Tx antenna and an Rx antenna cooperate with each other during operation, the quantity of antenna layers is affected not only by a quantity of Tx antennas at the transmit end, but also by a quantity of Rx antennas at the receive end. Generally, a maximum quantity of antenna layers is equal to a smallest value of the quantity of Tx antennas and the quantity of Rx antennas. Therefore, when the quantity of Rx antennas in an antenna system is larger, the quantity of antenna layers is usually larger. For example, in a 4Tx+2Rx antenna system, the quantity of antenna layers is 2 at the maximum. In a 4Tx+4Rx antenna system, the quantity of antenna layers is 4 at the maximum. Therefore, after the quantity of Rx antennas put into use by the electronic device is increased, the quantity of spatial multiplexing layers increases during downlink data reception of the electronic device, to improve the channel capacity in the downlink data transmission process, thereby improving the downlink data transmission rate.

In some other embodiments, based on a large quantity of Rx antennas, the electronic device can improve a modulation and coding scheme (modulation and coding scheme, MCS) of a signal, thereby improving the downlink data transmission rate.

Modulation is a process of converting a signal generated by a signal source into a form suitable for wireless transmission. The MCS includes binary phase shift keying (binary phase shift keying, BPSK), 16-quadrature amplitude modulation (quadrature amplitude modulation, QAM), quadrature phase shift keying (quadrature phase shift keying, QPSK), 64-QAM, and the like. The MCS defines a quantity of valid bits that can be carried in one resource element (resource element, RE). Currently, there are a total of 32 MCSs, and index numbers of the MCSs are respectively 0 to 31, where schemes whose index numbers are 29 to 31 are reserved. A larger MCS index number represents a larger quantity of valid bits that can be carried in one RE. When the quantity of Rx antennas in the electronic device is increased, the electronic device may enhance the MCS to modulate a radio signal. In this embodiment, enhancing the MCS means selecting an MCS with a larger index number to increase the quantity of valid bits that can be carried in one RE in the communication process, thereby improving the data transmission rate.

In the downlink communication process, increasing the quantity of Rx antennas put into use by the electronic device can improve the downlink communication rate, but also causes an increase in the power consumption of the device. For consideration of both the downlink communication rate and the power consumption of the device, usually the electronic device dynamically adjusts, based on a current service status, a quantity of Rx antennas actually put into use, to use a small quantity of Rx antennas for signal reception when there is no data service or traffic of a data service is light, and use a large quantity of Rx antennas for signal reception when the traffic of the data service is heavy.

In some embodiments, as shown in FIG. 2A, a modem of the electronic device monitors a downlink scheduling rate of the network-side device for the electronic device in real time, and controls the quantity of Rx antennas based on a relationship between the downlink scheduling rate and a scheduling rate threshold (rate), for example, increases the in-use Rx antennas when the downlink scheduling rate is high and reduces the in-use Rx antennas when the scheduling rate is low.

In this embodiment, downlink scheduling means that in the downlink communication process, the network-side device (for example, a base station) performs air interface radio resource management, allocation, and the like, to ensure downlink data transmission. Because one network-side device is usually connected to a plurality of electronic devices, when transmitting data to a target electronic device, the network-side device needs to first perform downlink scheduling on the electronic device. The electronic device receives downlink data based on the current downlink scheduling.

In this embodiment, the downlink scheduling $rate = A/B * 100\%$, where A is a quantity of times of downlink scheduling actually received by the electronic device in a unit time, and B is a maximum quantity of times that the network-side device can schedule the electronic device in a unit time in a current communication manner. It may be understood that a higher downlink scheduling rate indicates that the network-side device invokes the electronic device more frequently for signal reception.

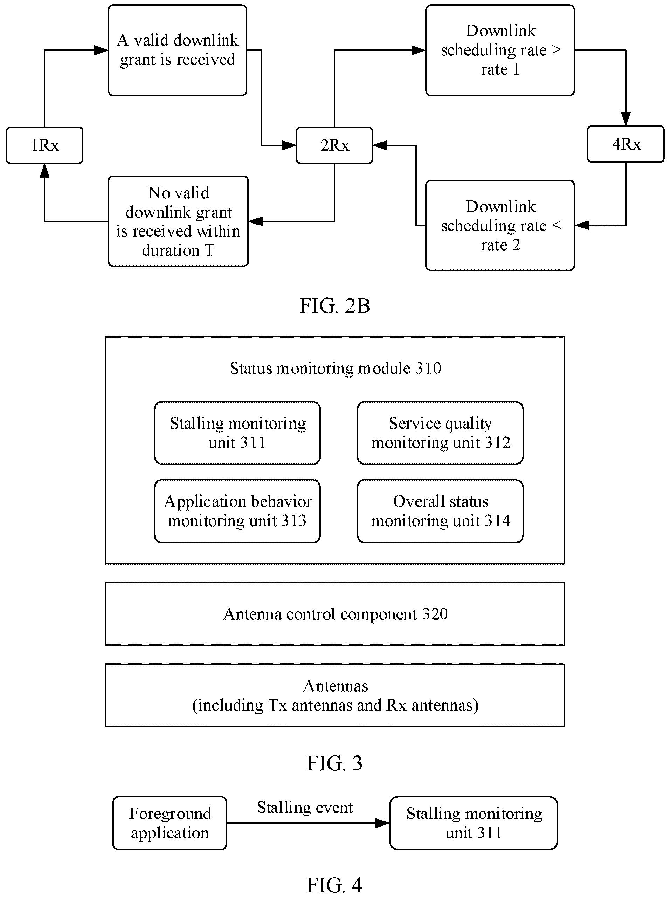

FIG. 2B is a diagram of an Rx antenna control process according to an embodiment of this application. An example in which an electronic device includes a total of four Rx antennas is used, to show a process in which a modem of the electronic device performs Rx antenna switching based on a downlink scheduling rate. Specifically, when the modem does not receive valid downlink scheduling (also referred to as a valid downlink grant) within preset time (for example, 60 ms), the modem usually puts only one Rx antenna into use, to reduce power consumption of the device. After the modem receives the valid downlink scheduling, the modem first puts two Rx antennas into use for downlink data reception, and continues to monitor the downlink scheduling rate. After the downlink scheduling rate exceeds a first threshold rate 1, the modem uses four Rx antennas for downlink data reception, to receive downlink data at a high speed. For example, rate 1 = 15%. In addition, in a process in which the modem uses the four Rx antennas for downlink data reception, if it is detected that the downlink scheduling rate is less than a second threshold rate 2, the modem switches to using two Rx antennas for downlink data reception, to reduce power consumption. For example, rate 2 = 6%. If the modem does not receive the valid downlink scheduling within the preset time (for example, 60 ms), the modem switches to using one Rx antenna, to further reduce the power consumption.

However, the modem cannot sense a running status of an upper-layer application. When the downlink scheduling rate decreases but the electronic device actually needs to improve a downlink reception rate, the modem may further reduce the quantity of Rx antennas put into use. Consequently, the downlink communication rate further decreases, and service experience deteriorates.

For example, in a densely populated stadium, canteen, station, or the like, a base station is usually connected to and performs radio resource scheduling on a large quantity of electronic devices. Because resources of the base station are limited, for an electronic device, a downlink scheduling rate of the electronic device is usually low. When the downlink scheduling rate is low, a user may experience a scenario such as slow web page refresh and frame freezing when using the electronic device to access the Internet, where service experience is poor. In this case, if the electronic device continues to control the Rx antennas by using the foregoing Rx antenna control method, the quantity of Rx antennas actually put into use is further reduced based on the low downlink scheduling rate. Consequently, the downlink communication rate is further reduced, and service experience is worse.

Therefore, an embodiment of this application provides a receive antenna control method. According to the method, the quantity of Rx antennas can be controlled based on a service running status at an application layer, thereby improving both the downlink communication rate and smoothness of application running.

FIG. 3 is a diagram of an electronic device to which a receive antenna control method is applicable according to an embodiment of this application. As shown in FIG. 3, the electronic device includes a status monitoring module 310, an antenna control component 320, and antennas.

**The status monitoring module 310** is configured to monitor various statuses of the electronic device in a running process of the electronic device. For example, the status monitoring module 310 includes a stalling monitoring unit 311, a service quality monitoring unit 312, an application behavior monitoring unit 313, and an overall status monitoring unit 314. The functions of the units are specifically as follows.

**The stalling monitoring unit 311** is configured to monitor a stalling status of a foreground application (application, App) when the foreground application runs in the foreground. It should be noted that the electronic device displays an application interface in a process in which the application runs in the foreground, but the electronic device does not display the application interface in a process in which the application runs in the background. Herein, stalling of the application may be explained as slow data loading of the application in the process of running in the foreground, and may be visually represented as intermittent pause of an image or an unsmooth image, or the like.

In some embodiments, as shown in FIG. 4, a stalling notification interface is disposed between the foreground application and the stalling monitoring unit 311. The foreground application monitors the stalling status of the foreground application itself, and notifies the stalling monitoring unit 311 of a stalling event after detecting stalling. If the stalling monitoring unit 311 receives the stalling event, it is determined that stalling has occurred in the foreground application. Similarly, if the stalling monitoring unit 311 does not receive the stalling event, it is considered that no stalling occurs in the foreground application, or the foreground application is not stalled.

In some other embodiments, the stalling monitoring unit 311 determines the stalling status of the foreground application based on a transmission control protocol (Transmission Control Protocol, TCP) flow that is obtained from an application processor (application processor, AP) and an air interface parameter that is obtained from the modem. For details, refer to descriptions below.

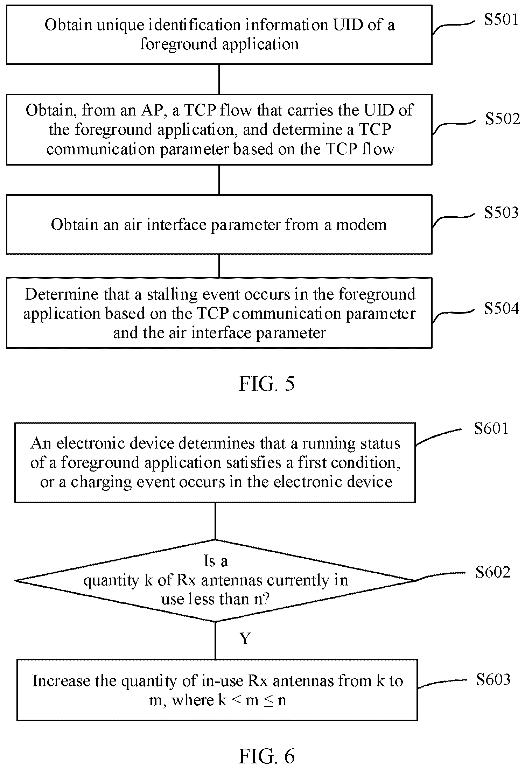

For example, as shown in FIG. 5, a process in which the stalling monitoring unit 311 determines the stalling status of the foreground application includes steps S501 to S504.

S501: Obtain unique identification information (unique identifier, UID) of the foreground application.

In this embodiment, the unique identification information uniquely identifies each application program installed in the electronic device, and UIDs of different applications are different. The electronic device may identify the application based on the UID of the application.

S502: Obtain, from the AP, the TCP flow that carries the UID of the foreground application, and determine a TCP communication parameter based on the TCP flow.

In this embodiment, the TCP communication parameter represents a data exchange status when the electronic device communicates with the network-side device based on the TCP protocol. For example, the TCP communication parameter includes round trip time (round-trip time, RTT), SYN response time, a TCP retransmission rate of a downlink packet, and the like.

The RTT represents total time from sending of a packet from a network layer (L3) of the transmit end to receipt of an acknowledgment message from the receive end by the network layer (L3) of the transmit end. The RTT can represent a packet transmission delay. A smaller RTT represents a shorter packet transmission delay, and a larger RTT represents a longer packet transmission delay.

The SYN response time is a time interval between a first handshake and a second handshake in a TCP three-way handshake process. Specifically, when the electronic device communicates with the network-side device based on the TCP protocol, three handshakes are usually required. For example, the electronic device is a client (client) and the network-side device is a server (server) in the downlink communication process. The first handshake is as follows: The client sends an SYN message to the server, to request to establish a connection to the server. The second handshake is as follows: The server returns an ACK+SYN message to the electronic device, indicating that the server agrees and requests to establish the connection to the client. A third handshake is as follows: The client sends an ACK message to the server, indicating that the client agrees to establishing the connection with the server. On this basis, both the client and the server are ready for data transmission, and then data transmission may be performed. A time interval from sending the SYN message by the electronic device to receiving, by the electronic device, the ACK+SYN message returned by the network-side device is the SYN response time in this embodiment.

The TCP retransmission rate of the downlink packet is a ratio of a quantity of retransmitted packets to a quantity of valid packets in a TCP communication process. The TCP retransmission rate can represent a packet loss in the TCP communication process. It may be understood that a higher TCP retransmission rate represents a greater packet loss and poorer communication quality.

S503: Obtain an air interface parameter from the modem.

In this embodiment, the air interface parameter includes reference signal strength (reference signal received power, RSRP), and/or reference signal quality (reference signal received quality, RSRQ), and/or a downlink symbol error rate of a physical layer, and the like. A symbol error rate (symbol error rate, SER) is an indicator for measuring data transmission accuracy within specified time. Symbol error rate = Quantity of symbol errors during transmission/Total quantity of transmitted symbols * 100%. It may be understood that a lower symbol error rate represents higher data transmission accuracy. The downlink symbol error rate represents accuracy in the downlink data transmission process.

It should be noted that a sequence of S502 and S503 is not limited in this embodiment, that is, the stalling monitoring unit 311 may first perform S502 and then perform S503, or may first perform S503 and then perform S502.

S504: Determine the stalling status of the foreground application based on the TCP communication parameter and the air interface parameter.

In some embodiments, when the RTT in the TCP communication parameter is greater than an RTT threshold, and/or the SYN response time is greater than a response time threshold, and/or the TCP retransmission rate of the downlink packet is greater than a retransmission rate threshold, and/or the reference signal strength is less than a signal strength threshold, and/or the reference signal quality is less than a signal quality threshold, and/or the downlink symbol error rate is greater than a symbol error rate threshold, the stalling monitoring unit 311 determines that stalling has occurred in the foreground application.

For example, the RTT threshold may be 2s, 2.5s, or the like; the response time threshold may be 1s, 1.5s, or the like; the retransmission rate threshold may be 10%, 15%, or the like; the signal strength threshold may be -100 dBm, -105 dBm, or the like; the signal quality threshold may be -10, -15, or the like; a time threshold may be 1000 ms, 1500 ms, or the like; and the symbol error rate threshold may be 15%, 20%, or the like. This is not specifically limited in this embodiment.

In some other embodiments, the stalling monitoring unit 311 may use a communication indicator to represent overall communication quality of the foreground application in the downlink communication process. The communication indicator is determined comprehensively based on the TCP communication parameter and the air interface parameter. A higher communication indicator represents higher communication quality, and a lower communication indicator represents poorer communication quality. On this basis, the stalling monitoring unit 311 may determine the communication indicator of the foreground application once at an interval of preset time (for example, 1 second); and if the communication indicator is less than an indicator threshold, determine that stalling has occurred in the foreground application.

**The service quality monitoring unit 312** is configured to monitor whether a service flow of the foreground application is abnormal. For example, the service quality monitoring unit 312 may monitor an SYN response time of the service flow, and if the SYN response time exceeds the preset duration, for example, 1.5s, determine that the service flow is abnormal; or may monitor the retransmission rate of the downlink TCP data packet, and if the retransmission rate is greater than the retransmission rate threshold, for example, 10%, determine that the service flow of the foreground application is abnormal.

It should be noted that a packet loss usually occurs in the communication process. To ensure that the receive end can receive data as complete as possible, the transmit end may retransmit some data packets. On this basis, the retransmission rate is a ratio of a quantity of retransmitted data packets to a total quantity of data packets within preset time. In general, the higher the retransmission rate, the poorer the communication quality.

**The application behavior monitoring unit 313** is configured to monitor whether there is a case of burst heavy traffic for the application, that is, there is a requirement for heavy-traffic data reception, for example, the application performs cold start or the application initiates a heavy-traffic service in a running process.

The cold start of the application means a process in which, when the application has ended a background process (which may also be understood as that the application quits from both the foreground and the background), the application re-creates a process to be started. After cold start of the application succeeds, generally a large amount of data needs to be quickly loaded from an application server, and the downlink data transmission rate is required to be high. The heavy-traffic service initiated by the application in the running process may be that the application refreshes a current interface, or initiates a search for new content, or initiates a download task, or the like. For example, a browser application refreshes a web page, a navigation application performs route planning based on destination information, or a short message service video application refreshes content.

**The overall status monitoring unit 314** is configured to monitor a running status of the electronic device, for example, a temperature of a housing of the electronic device, whether the electronic device is in a power saving mode, or whether the electronic device is in a charging state, or a remaining power.

**The antenna control component 320** is configured to dynamically adjust, based on various monitoring results of the status monitoring module 310, such as one or more of the stalling status, service quality, an application behavior, and the running status of the device, the in-use Rx antennas in the downlink communication process. This process includes a process of determining the quantity of Rx antennas and a process of actually executing adjustment and control of the Rx antennas.

**The antennas** include Tx antennas and Rx antennas. In the electronic device, the Tx antenna is configured to transmit a signal in an uplink communication process, and the Rx antenna is configured to receive a signal in a downlink communication process. The electronic device includes a total of n Rx antennas. However, in an actual process of use, the electronic device does not necessarily use the n Rx antennas at every moment to simultaneously perform downlink signal reception, but dynamically adjusts the quantity of in-use Rx antennas for consideration of both the service quality and the power consumption of the device. An Rx antenna that is not in use is not to receive a downlink signal.

It should be noted that, the structure described in this embodiment of this application does not constitute any specific limitation on the electronic device. In some other embodiments of this application, the electronic device may include more components than those shown in the figure, some components may be combined, some components may be split, or a different component deployment may be used. The components shown in the figure may be implemented by hardware, or software, or a combination of software and hardware. For example, although not shown in this embodiment, the electronic device may further include one or more of components such as a processor, a memory, a charging management module, a mobile communication module, a wireless communication module, a sensor, a speaker, a button, and a display screen.

Based on the electronic device provided in the foregoing embodiment, the following specifically describes an Rx antenna control method according to an embodiment of this application.

FIG. 6 is a flowchart of an Rx antenna control method according to an embodiment of this application. As shown in FIG. 6, the method includes step S601 to step S603.

S601: An electronic device determines that a running status of a foreground application satisfies a first condition, or a charging event occurs in the electronic device.

Optionally, that the running status of the foreground application satisfies the first condition includes: Stalling occurs in a running process of the foreground application, or cold start of the foreground application succeeds, or the foreground application sends a preset data obtaining request, such as a page refresh request, a data download request, or an information search request, to a network-side device.

S602: The electronic device determines whether a quantity k of Rx antennas currently in use is less than n, where n is a total quantity of Rx antennas.

S603: When k < n, the electronic device increases the quantity of in-use Rx antennas from k to m, where k < m ≤ n.

In some implementations, the electronic device may increase the quantity of in-use Rx antennas from k to the maximum quantity n, to use a highest receive antenna specification (nRx) for downlink signal reception, thereby quickly improving a downlink communication rate. For example, when the electronic device includes a total of four Rx antennas but the electronic device is currently using only two Rx antennas, the electronic device switches to using 4Rx for downlink signal reception.

In some other implementations, the electronic device may appropriately increase the quantity of in-use Rx antennas, but does not increase the quantity to the maximum value n, to save power consumption of the device. For example, when the electronic device includes a total of eight Rx antennas but the electronic device is currently using only two Rx antennas, the electronic device switches to using 4Rx for downlink signal reception.

It should be noted that, after the quantity of in-use Rx antennas of the electronic device is increased, in a process in which the electronic device communicates with the network-side device by using the MIMO technology, the electronic device may notify the network-side device of a new quantity of Rx antennas after a change, so that the network-side device adaptively increases a quantity of Tx antennas to improve a MIMO layer of a communication system and a downlink communication rate, thereby improving service experience. Alternatively, the electronic device may enhance an MCS based on the new quantity of Rx antennas after the change, to increase a quantity of valid bits that can be carried in one RE in a communication process, thereby improving a data transmission rate.

In conclusion, in this embodiment, the electronic device adjusts the quantity of in-use Rx antennas with reference to the actual running status of the foreground application, so that the quantity of in-use Rx antennas can be increased under a circumstance of poor service experience, for example, when stalling occurs in the foreground application; or under a circumstance of not considering the power consumption of the device, for example, when the electronic device is in a charging state; or when the foreground application needs to receive heavy-traffic data, to improve the downlink communication rate, thereby improving service smoothness and user experience.

The following describes the Rx antenna control method provided in this embodiment of this application by using an example in which the electronic device uses the highest receive antenna specification (nRx) in different scenarios to improve the downlink communication rate.

**Example 1: a stalling scenario**

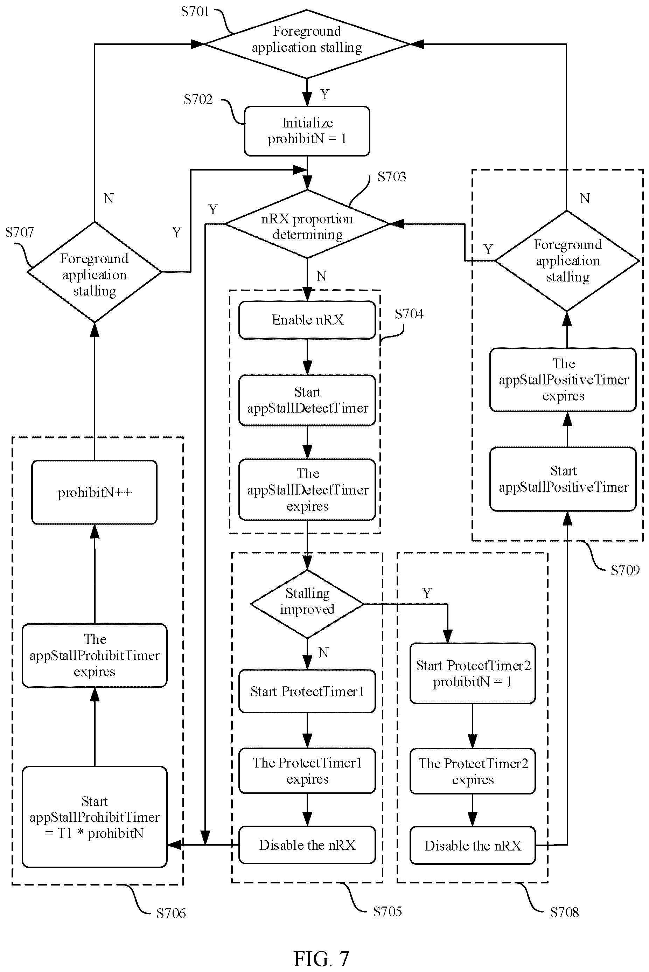

FIG. 7 is a flowchart of an Rx antenna control method according to another embodiment of this application. The method relates to a process in which an electronic device uses a highest receive antenna specification (nRx) for downlink signal reception after stalling occurs in a foreground application. The method includes steps S701 to S709, and steps S701 to S709 are specifically implemented under the control of an antenna control component 320 of the electronic device.

S701: The electronic device determines whether stalling occurs in the foreground application.

In this embodiment, specifically, the antenna control component 320 determines, based on a stalling event notified by a stalling monitoring unit 311, whether stalling occurs in the foreground application. For a process in which the stalling monitoring unit 311 monitors whether a stalling event occurs in the foreground application, refer to the foregoing description. Details are not described herein again.

Optionally, an application trustlist may be preset in the antenna control component 320, where the application trustlist stores identification information of some applications that have a requirement for a high downlink communication rate. After determining that stalling occurs in the foreground application, the antenna control component 320 needs to determine whether the foreground application is in the application trustlist. If the foreground application is in the trustlist, subsequent steps continue to be performed to ensure a downlink communication rate of the foreground application. If the foreground application is in the trustlist, the subsequent steps are not performed. This prevents some applications that do not have a requirement for a high downlink rate from frequently enabling an nRx function to cause an increase in power consumption of the device.

S702: If stalling occurs in the foreground application, the electronic device initializes a quantity of stalling times: prohibitN = 1.

In this embodiment, the quantity of stalling times represents a quantity of times that stalling has occurred in the foreground application in a current Rx antenna control process.

S703: The electronic device determines whether a current proportion of usage of the Rx antennas is greater than a proportion threshold.

In this embodiment, the proportion of usage of the Rx antennas = Quantity of Rx antennas currently in use/Total quantity n of the Rx antennas. The proportion threshold is a preset value, and may be 75%, 80%, or the like. It may be understood that when the proportion of usage of the Rx antennas is greater than the proportion threshold, it indicates that the electronic device is using a large quantity of Rx antennas for downlink data reception. When the proportion of usage of the Rx antennas is less than the proportion threshold, it indicates that the electronic device is using a small quantity of Rx antennas.

Optionally, in some other implementations, S703 may be replaced with the following step: The electronic device determines whether the quantity of Rx antennas currently in use is greater than an Rx antenna threshold. The Rx antenna threshold is usually less than or equal to the total quantity n of the Rx antennas in the electronic device. For example, n = 4, and the Rx antenna threshold may be 3.

S704: When the proportion of usage of the Rx antennas is less than the proportion threshold, the electronic device enables the nRx, and tests whether the nRx can improve the stalling status of the foreground application.

It should be noted that, generally, downlink communication quality is comprehensively affected by a plurality of factors, such as a server load, a node routing delay, cell bandwidth, a cell load, downlink air interface quality, receive antenna performance of the electronic device, and performance of a central processing unit (central processing unit, CPU) of the electronic device. In a case such as poor downlink air interface quality, a high cell load, or poor receive antenna performance, the downlink communication quality can be improved by increasing the in-use Rx antennas. However, in a case such as a high server load, a long node routing delay, or poor CPU performance of the electronic device, the downlink communication quality cannot be improved even if the electronic device increases the in-use Rx antennas. Therefore, the antenna control component 320 needs to perform a test to determine whether enabling the nRx can improve the stalling of the foreground application.

In some embodiments, when the proportion of usage of the Rx antennas is less than the proportion threshold, the antenna control component 320 controls the nRx to be enabled for downlink signal reception, and starts a test timer appStallDetectTimer. A length of the appStallDetectTimer is a preset length. For example, appStallDetectTimer = 1 min. After the test timer expires, the antenna control component 320 determines, based on a notification from the stalling monitoring unit 311, whether the stalling of the foreground application is improved.

The stalling monitoring unit 311 monitors the stalling status of the foreground application once at an interval of preset time (for example, 100 ms), and notifies the antenna control component 320 of a stalling event after detecting the stalling of the foreground application. Therefore, the antenna control component 320 may determine, based on a frequency at which the stalling event is received, whether the stalling of the foreground application is improved.

For ease of description, in this embodiment, the frequency at which the stalling event is received is referred to as a stalling frequency. A stalling frequency before the nRx is enabled is a first stalling frequency, and a stalling frequency after the nRx is enabled is a second stalling frequency. The second stalling frequency may be a stalling frequency in a timing process of the test timer, or may be a stalling frequency within a preset time period (for example, within 3s) after timing of the test timer ends.

In some embodiments, if the second stalling frequency is less than the first stalling frequency, it is considered that enabling the nRx can improve the stalling of the foreground application. If the second stalling frequency is greater than or equal to the first stalling frequency, it is considered that enabling the nRx cannot improve the stalling of the foreground application.

If the stalling of the foreground application is not improved, steps S705 to S707 are performed to disable the nRx. If the stalling of the foreground application is improved, steps S708 and S709 are performed, to use the nRx.

In addition, before the electronic device enables the nRx, an overall status of the electronic device, for example, a temperature of a housing, remaining power, and whether the electronic device is in a power saving mode, may be comprehensively evaluated. If the overall status satisfies a requirement, for example, the temperature of the housing is lower than a temperature threshold, the electronic device is not in the power saving mode, and the remaining power is greater than a power threshold, the nRx is enabled. If the overall status does not satisfy the requirement, the nRx is not enabled.

S705: If the stalling of the foreground application is not improved, the electronic device disables the nRx after a first protection timer expires.

Specifically, if the stalling of the foreground application is not improved, the antenna control component 320 starts the first protection timer ProtectTimer1. A length of the ProtectTimer1 is a preset length. For example, ProtectTimer1 = 30s. After the first protection timer expires, the antenna control component 320 disables the nRx. In this embodiment, there is a period of delay before the antenna control component 320 disables the nRx, to prevent the electronic device from frequently enabling and disabling the nRx function.

It should be noted that, disabling the nRx by the electronic device means that the highest receive antenna specification is not enabled for downlink signal reception, and not all Rx antennas are disabled. The electronic device may continue to use a small quantity of RX antennas for downlink signal reception. For example, when the highest receive antenna specification of the electronic device is 4Rx, after disabling the 4Rx, the electronic device may continue to use 1Rx or 2Rx for downlink signal reception.

S706: After disabling the nRx, the electronic device starts a suppression timer; and after the suppression timer expires, increases the quantity of stalling times prohibitN by 1.

In this embodiment, the suppression timer is appStallProhibitTimer = T1 * prohibitN, where T1 is a preset length. For example, T1 = 3s and prohibitN = 2, and appStallProhibitTimer = 3s * 2 = 6s.

It can be learned that the length of the suppression timer is positively correlated with the quantity of stalling times of the foreground application. In other words, the length of the suppression timer is greater as the quantity of stalling times is larger. When the electronic device enables the nRx for a plurality of times but the stalling of the foreground application still cannot be improved, the suppression timer can shorten a proportion of duration in which the nRx is enabled in the entire Rx antenna control process, thereby reducing power consumption of the device.

S707: After the suppression timer expires, if no stalling occurs in the foreground application, the current round of Rx antenna control ends, and the process returns to S701, to wait for a new round of Rx antenna control to start; or if stalling still occurs in the foreground application, the process returns to S703, to continue to use the nRx to improve the stalling of the foreground application.

S708: If the stalling of the foreground application is improved, the electronic device disables the nRx after a second protection timer expires.

If the stalling of the foreground application is improved, the electronic device continues to use the nRx to improve the downlink communication quality, and continues to improve the stalling of the foreground application. However, the power consumption is high when the highest receive antenna specification is persistently in use, and probably a network environment of the electronic device is improved. Therefore, the electronic device may disable the nRx after operating for a period of time by using the nRx, to save power consumption of the electronic device.

Specifically, the antenna control component 320 of the electronic device may start the second protection timer ProtectTimer2. A length of the ProtectTimer2 is a preset length. For example, ProtectTimer2 = 3 min. Generally, the length of the ProtectTimer2 is greater than the length of the ProtectTimer1. In a timing process of the second protection timer, the electronic device may continuously use the nRx for downlink signal reception, to continue to improve the downlink communication rate and the downlink communication quality. After the second protection timer expires, the electronic device disables the nRx, to save the power consumption of the device.

S709: After disabling the nRx, the electronic device starts an autonomous operation timer; and after the autonomous operation timer expires, determines whether stalling occurs in the foreground application. If no stalling occurs in the foreground application, the current round of Rx antenna control ends, and the process returns to S701, to wait for a new round of Rx antenna control to start. If stalling still occurs in the foreground application, the process returns to S703, to continue to use the nRx to improve the stalling of the foreground application.

In this embodiment, a length of the autonomous operation timer appStallPositiveTimer is a preset length. For example, appStallPositiveTimer = 1 min. In a timing process of the autonomous operation timer, the electronic device may continuously use a small quantity of Rx antennas (for example, 2Rx) for downlink signal reception, to monitor whether the small quantity of Rx antennas can ensure smooth running of the foreground application. After the autonomous operation timer expires, if no stalling occurs in the foreground application, it indicates that the small quantity of Rx antennas can ensure smooth running of the foreground application, and this round of Rx antenna control ends. If stalling occurs in the foreground application, it indicates that the small quantity of Rx antennas cannot ensure smooth running of the foreground application, and the electronic device needs to continue to enable the nRx to improve the stalling of the foreground application.

In conclusion, according to the Rx antenna control method provided in this embodiment, after stalling occurs in the foreground application, the electronic device may enable the highest receive antenna specification for downlink signal reception. The highest receive antenna specification can improve an amount of data of single scheduling by enhancing an MCS index, and/or a MIMO layer, and the like in a downlink communication process, to improve a downlink signal reception rate and improve the stalling of the foreground application, thereby improving user experience.

**Example 2: a heavy-traffic data reception scenario**

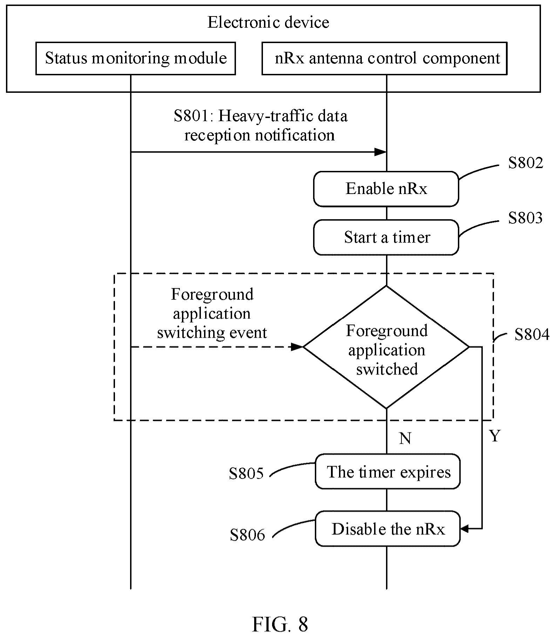

FIG. 8 is a flowchart of an Rx antenna control method according to still another embodiment of this application. As shown in FIG. 8, the method includes steps S801 to S806.

S801: An electronic device detects that a foreground application has a requirement for heavy-traffic data reception.

For example, the heavy-traffic data reception scenario includes a scenario in which the foreground application receives data from an application server after the foreground application performs cold start, or a scenario in which the foreground application refreshes a page in a running process, or a scenario in which the foreground application downloads data in a running process, or a scenario in which the foreground application searches for information in a running process. This is not specifically limited in this embodiment.

On this basis, if an application behavior monitoring unit 313 detects that cold start of the foreground application succeeds, or detects that the foreground application sends a data obtaining request such as a page refresh request, a data download request, or an information search request to the application server in the running process, it is determined that the electronic device has the requirement for heavy-traffic data reception.

In S801, specifically, the application behavior monitoring unit 313 monitors whether the foreground application has the requirement for heavy-traffic data reception; and if the foreground application has the requirement for heavy-traffic data reception, sends a heavy-traffic data reception notification to an antenna control component 320.

S802: The electronic device enables the nRx.

Optionally, before enabling the nRx, the electronic device needs to comprehensively evaluate an overall status of the electronic device. If the overall status satisfies the requirement, the nRx is enabled. If the overall status does not satisfy the requirement, the nRx is not enabled. Details are not described herein again.

S803: The electronic device starts a protection timer.

In steps S802 and S803, specifically, the antenna control component 320 controls execution of corresponding control operations.

Optionally, the antenna control component 320 may set timers of different lengths for different heavy-traffic data reception scenarios. For example, in the scenario in which cold start of the application succeeds, a timer is set: coldStartStateTimer = 30s. In the scenario in which the application downloads data during running, a timer is set: downloadTimer = 10s.

S804: In a process of using the nRx, the electronic device determines whether the foreground application is switched.

For example, after detecting that the foreground application is switched, that is, after detecting that the foreground application is switched to another application, an application behavior monitoring unit in a status monitoring module 310 notifies the antenna control component 320 of a foreground application switching event. In the process of using the nRx, the electronic device determines, based on whether the foreground application switching event is received, whether the foreground application is switched.

In the process of using the nRx, if the electronic device has switched the foreground application, S805 is not performed, but S806 is directly performed, that is, the nRx is directly disabled without waiting for the timer to expire. If the electronic device does not switch the foreground application, subsequent steps S805 and S806 continue to be performed, that is, the nRx is disabled after the timer expires.

S805: The protection timer of the electronic device expires.

S806: The electronic device disables the nRx.

In steps S805 and S806, specifically, the antenna control component 320 controls execution of corresponding control operations.

It should be noted that, in steps S803 to S806, to prevent the electronic device from persistently using a highest receive antenna specification (that is, nRx) for downlink signal reception to cause an increase in power consumption of the device, the electronic device may enable the nRx only in a period of time, and disable the nRx after the period of time ends. For example, first, the antenna control component 320 of the electronic device may control a protection timer to be started, and disable the nRx after the protection timer expires.

In conclusion, according to the Rx antenna control method provided in this embodiment of this application, when detecting that the electronic device has the requirement for heavy-traffic data reception, the electronic device may use the highest receive antenna specification for downlink data reception, to improve a downlink data reception rate.

**Example 3: a charging scenario**

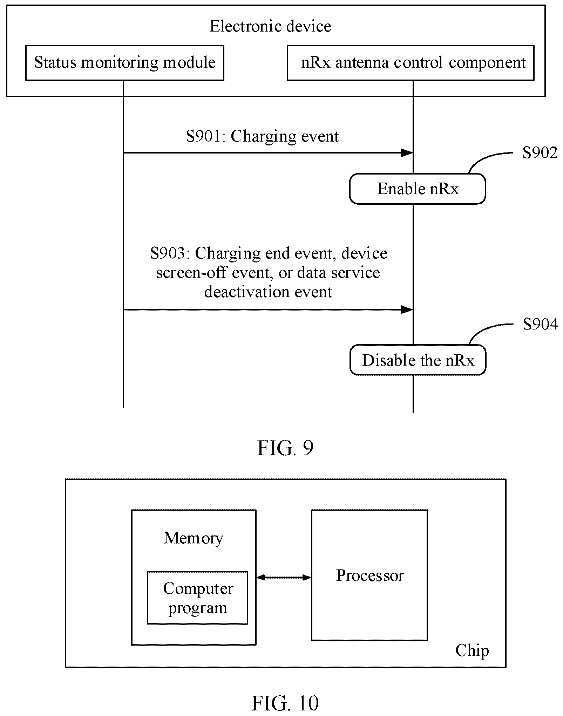

FIG. 9 is a flowchart of an Rx antenna control method according to yet another embodiment of this application. As shown in FIG. 9, the method includes steps S901 to S904. Specifically, steps S901 to S904 are performed under the control of an antenna control component 320 of an electronic device.

S901: The electronic device detects a charging event.

In this embodiment, specifically, an overall status monitoring unit 314 monitors whether the electronic device is in a charging state. If detecting that the electronic device has switched from a non-charging state to the charging state, the overall status monitoring unit 314 determines that a charging event has occurred in the electronic device, and notifies the antenna control component 320 of the charging event.

S902: The electronic device enables the nRx.

In this embodiment, when the electronic device is in the charging state, the antenna control component 320 may enable a highest receive antenna specification (namely, nRx) for downlink signal reception without considering power consumption of the device, to ensure a downlink reception rate of the electronic device to a maximum extent.

Optionally, before enabling the nRx, the electronic device needs to comprehensively evaluate an overall status of the electronic device. If the overall status satisfies the requirement, the nRx is enabled. If the overall status does not satisfy the requirement, the nRx is not enabled. Details are not described herein again.

S903: In a process of using the nRx, the electronic device detects a charging end event, a screen-off event, or a data service deactivation event.

In this embodiment, when monitoring the charging state of the electronic device, the overall status monitoring unit 314 can further monitor an operating status of a screen and a data service status, and notify the antenna control component 320 of monitoring results. The operating status of the screen includes a screen-off state and a screen-on state, and the data service status includes an activated state and a deactivated state. The activated state of a data service includes a state in which a cellular data switch of the electronic device is turned on and a cellular data function can be used. The deactivated state of the data service includes a state in which the cellular data switch of the electronic device is turned off, or the electronic device has switched to a Wi-Fi network and the cellular data function is temporarily disabled.

For example, after detecting that the electronic device has switched from the charging state to the non-charging state, the overall status monitoring unit 314 notifies the antenna control component 320 of the charging end event; after detecting that the screen of the device is off, notifies the antenna control component 320 of the screen-off event; and after detecting that the data service has switched from the activated state to the deactivated state, notifies the antenna control component 320 of the data service deactivation event.

S904: The electronic device disables the nRx.

In this embodiment, the nRx is disabled under the control of the antenna control component 320. It can be learned from the foregoing description that, disabling the nRx by the electronic device means that the highest antenna specification is not enabled for downlink signal reception, and not all Rx antennas are disabled. The electronic device may continue to use a small quantity of receive antennas (for example, 1Rx or 2Rx) for downlink signal reception. Details are not described herein again.

According to the method provided in this embodiment of this application, the electronic device can use the highest antenna specification for downlink signal reception when the electronic device is in the charging state, to ensure smooth running of each application (including a foreground application and a background application) to a maximum extent in a charging process of the device, thereby improving user experience.

It should be understood that sequence numbers of the steps in the foregoing embodiments do not mean an execution sequence. The execution sequences of the processes should be determined based on functions and internal logic of the processes, and should not be construed as any limitation on implementation processes of embodiments of this application.

Based on a same concept, this application further provides the following technical solutions as implementation of the foregoing Rx antenna control method.

An embodiment of this application provides an electronic device. The electronic device includes a memory, a processor, and a computer program that is stored in the memory and is runnable on the processor. When the processor executes the computer program, the Rx antenna control method according to the foregoing embodiments is implemented.

An embodiment of this application further provides a computer-readable storage medium. The computer-readable storage medium stores a computer program. When the computer program is executed by a processor, the Rx antenna control method according to the foregoing embodiments is implemented.

An embodiment of this application further provides a chip. As shown in FIG. 10, the chip includes a processor and a memory. The memory stores a computer program. When the computer program is executed by the processor, the Rx antenna control method according to the foregoing embodiments is implemented.

An embodiment of this application further provides a computer program product. The program product includes a computer program. When the computer program is run by an electronic device, the electronic device is enabled to implement the Rx antenna control method according to the foregoing embodiments.

It should be understood that, the processor mentioned in embodiments of this application may be a central processing unit (central processing unit, CPU); or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct Rambus dynamic random access memory (direct Rambus RAM, DR RAM).

In embodiments provided in this application, division into the frameworks or modules is merely logical function division and there may be another division manner in actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

It may be clearly understood by persons skilled in the art that, for the purpose of convenient and brief description, for a detailed working process of the foregoing system, apparatus, and unit, reference may be made to a corresponding process in the foregoing method embodiments. Details are not described herein again.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

**Claims**

1. A receive antenna control method, applied to an electronic device, wherein the electronic device comprises n receive antennas, and the method comprises:

    determining a running status of a foreground application; and
    switching to using m receive antennas for signal reception when the running status satisfies a first condition and the electronic device uses k receive antennas for signal reception, wherein k < m, and m ≤ n.

2. The method according to claim 1, wherein that the running status satisfies the first condition comprises: stalling occurs in a running process of the foreground application.

3. The method according to claim 1, wherein that the running status satisfies the first condition comprises: cold start of the foreground application succeeds, or the foreground application sends a preset data obtaining request to a network-side device.

4. The method according to claim 3, wherein the preset data obtaining request comprises a page refresh request, a data download request, or an information search request.

5. The method according to claim 2, wherein

the stalling is determined by the foreground application; or
the stalling is determined by the electronic device based on a related parameter of an application processor AP, or based on a related parameter of an AP and a related parameter of a modem.

6. The method according to claim 5, wherein

the related parameter of the AP comprises: round trip time RTT of a transmission control protocol TCP flow of the foreground application, and/or a time interval between a first handshake and a second handshake in a TCP three-way handshake process, and/or a retransmission rate of a downlink data packet; and
the related parameter of the modem comprises: reference signal strength, and/or reference signal quality, and/or a downlink symbol error rate of a physical layer.

7. The method according to claim 2, 5, or 6, wherein switching to using the m receive antennas for signal reception when the running status satisfies the first condition and the electronic device uses the k receive antennas for signal reception comprises:

starting a test timer and using the n receive antennas for signal reception when the running status satisfies the first condition and the electronic device uses the k receive antennas for signal reception;
monitoring, after the test timer expires, whether the stalling of the foreground application is improved; and
reducing a quantity of in-use receive antennas if the stalling of the foreground application is not improved; or
continuing to use the n receive antennas for signal reception if the stalling of the foreground application is improved.

8. The method according to claim 7, wherein reducing the quantity of in-use receive antennas if the stalling of the foreground application is not improved comprises:

starting a first protection timer if the stalling of the foreground application is not improved; and
reducing the quantity of in-use receive antennas after the first protection timer expires.

9. The method according to claim 8, wherein after reducing the quantity of in-use receive antennas after the first protection timer expires, the method further comprises:

starting a suppression timer, wherein a length of the suppression timer is $T = T1 * prohibitN$, T1 is a preset length, and prohibitN is a quantity of stalling times; and
after the suppression timer expires, increasing the quantity of stalling times by 1, and re-determining whether stalling occurs in the running process of the foreground application.

10. The method according to any one of claims 7 to 9, wherein continuing to use the n receive antennas for signal reception if the stalling of the foreground application is improved comprises:

starting a second protection timer if the stalling of the foreground application is improved; and
using the n receive antennas for signal reception before the second protection timer expires.

11. The method according to claim 10, wherein the method further comprises:

after the second protection timer expires, reducing the quantity of in-use receive antennas, and starting an autonomous operation timer; and
after the autonomous operation timer expires, re-determining whether stalling occurs in the running process of the foreground application.

12. A receive antenna control method, applied to an electronic device, wherein the electronic device comprises n receive antennas, and the method comprises:

determining that a charging event occurs in the electronic device; and
in response to the charging event, switching to using m receive antennas for signal reception when the electronic device uses k receive antennas for signal reception, wherein k < m, and $m \leq n$.

13. The method according to claim 12, wherein the method further comprises:
reducing a quantity of in-use receive antennas after a charging end event, a device screen-off event, or a data service deactivation event is detected.

**14.** An electronic device, comprising a memory, a processor, and a computer program that is stored in the memory and is runnable on the processor, wherein when the processor executes the computer program, the method according to any one of claims 1 to 13 is implemented.

**15.** A computer-readable storage medium, wherein the computer-readable storage medium stores a computer program; and when the computer program is executed by a processor, the method according to any one of claims 1 to 13 is implemented.

**16.** A chip, wherein the chip comprises a processor and a memory; the memory stores a computer program; and when the computer program is executed by the processor, the method according to any one of claims 1 to 13 is implemented.

FIG. 1

FIG. 2A

A valid downlink grant is received

Downlink scheduling rate > rate 1

1Rx

2Rx

4Rx

No valid downlink grant is received within duration T

Downlink scheduling rate < rate 2

FIG. 2B

Status monitoring module 310

Stalling monitoring unit 311

Service quality monitoring unit 312

Application behavior monitoring unit 313

Overall status monitoring unit 314

Antenna control component 320

Antennas
(including Tx antennas and Rx antennas)

FIG. 3

Foreground application

Stalling event

Stalling monitoring unit 311

FIG. 4

Obtain unique identification information UID of a foreground application ⟋— S501

Obtain, from an AP, a TCP flow that carries the UID of the foreground application, and determine a TCP communication parameter based on the TCP flow ⟋— S502

Obtain an air interface parameter from a modem ⟋— S503

Determine that a stalling event occurs in the foreground application based on the TCP communication parameter and the air interface parameter ⟋— S504

FIG. 5

An electronic device determines that a running status of a foreground application satisfies a first condition, or a charging event occurs in the electronic device ⟋— S601

Is a quantity k of Rx antennas currently in use less than n? ⟋— S602

Y

Increase the quantity of in-use Rx antennas from k to m, where k < m ≤ n ⟋— S603

FIG. 6

FIG. 7

Electronic device

Status monitoring module    nRx antenna control component

S801: Heavy-traffic data
reception notification

Enable nRx    S802

Start a timer    S803

Foreground
application
switching event

Foreground
application
switched    S804

N    Y

S805    The timer expires

S806    Disable the nRx

FIG. 8

Electronic device

Status monitoring module

nRx antenna control component

S901: Charging event

S902

Enable nRx

S903: Charging end event, device
screen-off event, or data service
deactivation event

S904

Disable the nRx

FIG. 9

Memory

Computer
program

Processor

Chip

FIG. 10

## INTERNATIONAL SEARCH REPORT

| International application No. |
|---|
| **PCT/CN2024/073009** |

**A. CLASSIFICATION OF SUBJECT MATTER**

H04W72/1263(2023.01)i

According to International Patent Classification (IPC) or to both national classification and IPC

**B. FIELDS SEARCHED**

Minimum documentation searched (classification system followed by classification symbols)

IPC: H04W H04L G06F H04M

Documentation searched other than minimum documentation to the extent that such documents are included in the fields searched

Electronic data base consulted during the international search (name of data base and, where practicable, search terms used)

DWPI, CNTXT, ENTXTC, ENTXT: 增加, 天线, 数量, 个数, 卡顿, 充电, 流畅, 下载, 视频, antenna, number, quantity, increase, charge, video, load, download, buffer

**C. DOCUMENTS CONSIDERED TO BE RELEVANT**

| Category* | Citation of document, with indication, where appropriate, of the relevant passages | Relevant to claim No. |
|---|---|---|
| X | CN 109327612 A (BEIJING XIAOMI MOBILE SOFTWARE CO., LTD.) 12 February 2019 (2019-02-12)<br>description, paragraphs 35-73 | 1-16 |
| X | CN 115361047 A (BEIJING XIAOMI MOBILE SOFTWARE CO., LTD.) 18 November 2022 (2022-11-18)<br>description, paragraphs 45-84 | 1-16 |
| A | CN 108551685 A (GUANGDONG OPPO MOBILE TELECOMMUNICATIONS CORP., LTD.) 18 September 2018 (2018-09-18)<br>entire document | 1-16 |
| A | CN 110290277 A (VIVO MOBILE COMMUNICATION CO., LTD.) 27 September 2019 (2019-09-27)<br>entire document | 1-16 |
| A | US 10686499 B1 (SPRINT SPECTRUM L.P.) 16 June 2020 (2020-06-16)<br>entire document | 1-16 |

☐ Further documents are listed in the continuation of Box C.    ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **14 March 2024** | **21 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073009**

| Patent document cited in search report | | | Publication date (day/month/year) | Patent family member(s) | Publication date (day/month/year) |
|---|---|---|---|---|---|
| CN | 109327612 | A | 12 February 2019 | None | |
| CN | 115361047 | A | 18 November 2022 | None | |
| CN | 108551685 | A | 18 September 2018 | None | |
| CN | 110290277 | A | 27 September 2019 | None | |
| US | 10686499 | B1 | 16 June 2020 | None | |

Form PCT/ISA/210 (patent family annex) (July 2022)

**EP 4 676 145 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310446691